# DEMANDE DE BREVET EUROPEEN

(11) **EP 4 727 108 A1**
(43) Date de publication de la demande: **15.04.2026**
(21) Numéro de dépôt: 25198467.0
(22) Date de dépôt: 27.08.2025
(51) Int. Cl.: H04M 11/02, H04N 7/18

(54) **SYSTÈME DE CONTRÔLE D ACCÈS**

(30) Priorité: 08.10.2024 FR 2410863
(71) Demandeur: COGELEC, 85290 Mortagne-sur-Sèvre (FR)
(72) Inventeur: SCHIRM, Sébastien, 85600 Montaigu (FR); Leclerc, Roger, 85130 Les landes genusson (FR)
(74) Mandataire: Lequien, Philippe

(57) **Abrégé**

L'invention concerne un système de contrôle d'accès, du type mettant en oeuvre :
- un interphone d'entrée (1) d'un immeuble comprenant des logements (L) ;
- au moins un ordiphone (2) d'un résident, intégrant une application numérique (20) résident incluant un numéro d'enregistrement unique (200) ;
- une plateforme informatique (3) comprenant une unité informatique (30) paramétrée pour mettre en relation l'interphone d'entrée (1) avec l'ordiphone (2) d'un résident par l'intermédiaire de l'application numérique résident (20) ;

caractérisé en ce qu'il comprend, à l'intérieur de chaque logement (L), un dispositif (4) présentant un identifiant unique (40) de logement apte à être lu par l'ordiphone (2), la plateforme informatique (3) incluant une base de données (31) listant les logements (L) et leur identifiant unique (40) de logement,
et en ce que l'unité informatique (30) de la plateforme informatique (3) est paramétrée pour recevoir, par l'intermédiaire de l'interphone d'entrée (1), une demande de mise en relation avec un résident et émettre, à destination de l'ordiphone (2) du résident identifié par le numéro d'enregistrement unique (200), une notification d'appel.

## Description

Le domaine de l'invention est celui de la conception et de la fabrication d'un système de contrôle d'accès.

Plus précisément, l'invention concerne un système de contrôle d'accès à l'intérieur d'un immeuble, comprenant des logements, que ce soit des logements d'habitation ou des logements professionnels tels que des bureaux ou autres.

Ces systèmes de contrôle mettent classiquement en œuvre des dispositifs de reconnaissance qui sont situés au niveau des entrées, voire des sorties, de l'immeuble à contrôler.

Les entrées comprennent des portes dont l'ouverture et la fermeture peuvent être pilotées par le système.

Par l'expression porte, il est plus généralement entendu un dispositif obturant un passage, d'un piéton ou d'un véhicule, tel qu'une barrière, un sas, un tourniquet, ou une porte au sens propre du terme.

Par l'expression ouverture, ou l'expression fermeture, il est entendu le passage de la porte d'une position d'obturation d'un passage, jusqu'à une position de libération du passage. Il est également entendu que l'ouverture ou la fermeture ne peuvent concerner que l'actionnement de moyens de verrouillage de la porte dans une position d'obturation du passage.

De façon désormais répandue, les systèmes de contrôle d'accès à l'entrée des immeubles mettent en œuvre un interphone d'entrée, accessible aux visiteurs, et par l'intermédiaire duquel ces visiteurs appellent l'occupant d'un logement (ou éventuellement d'un bureau), le logement en question étant équipé d'un interphone, voire d'un visiophone, permettant à l'occupant d'échanger avec le visiteur et/ou de visualiser celui-ci avant, éventuellement, de lui autoriser l'accès en déclenchant l'ouverture de la porte de l'immeuble.

Plus récemment, certains systèmes de contrôle d'accès permettent à un résident de l'immeuble de charger sur son ordiphone une application numérique et une plateforme informatique du système de contrôle est paramétrée pour mettre en relation l'interphone d'entrée avec l'ordiphone du résident par l'intermédiaire de l'application numérique chargée.

Pour le fonctionnement de ce type de système, deux solutions sont actuellement déployées, à savoir :
- relier l'interphone du logement à la box du résident, soit par un câble électrique soit par un réseau sans fil, pour relier le système à l'ordiphone du résident ;
- l'interphone du logement est paramétré avec une donnée personnelle, et en particulier avec le numéro de téléphone du résident, pour que l'interphone entre en communication directement avec le téléphone ou l'ordiphone du résident.

Toutefois, selon une attente des gestionnaires de logement, il est souhaité de ne pas avoir de câblage électrique pour relier l'interphone du logement, voire il est souhaité de s'affranchir de tout appareil électrique pour mettre en communication le résident avec l'interphone de l'immeuble lors d'un appel visiteur.

Du côté des résidents, ceux-ci souhaitent de plus en plus protéger leurs données personnelles et, en ce sens, ne souhaitent pas communiquer leur numéro de téléphone au gestionnaire de logement.

L'invention a notamment pour objectif de répondre à ces attentes.

Plus précisément, l'invention a pour objectif de proposer un système de contrôle d'accès à un immeuble, du type utilisant un interphone d'entrée susceptible de mettre en communication un visiteur avec l'ordiphone d'un résident, qui évite de devoir recourir à des données personnelles et en particulier au numéro de téléphone de l'ordiphone du résident.

L'invention a également pour objectif de fournir un tel système de contrôle qui évite la mise en œuvre d'un appareil interne au logement, en relation avec le système de contrôle, qui nécessite un câblage électrique.

L'invention a également pour objectif de fournir un tel système de contrôle qui facilite les mises à jour du système par le gestionnaire de logement lors des arrivées ou départs de résidents.

Ces objectifs, ainsi que d'autres qui apparaîtront par la suite, sont atteints grâce à l'invention qui a pour objet un système de contrôle d'accès, du type mettant en œuvre :
- un interphone d'entrée d'un immeuble comprenant des logements ;
- au moins un ordiphone d'un résident de l'immeuble, l'ordiphone intégrant une application numérique résident incluant un numéro d'enregistrement unique ;
- une plateforme informatique comprenant une unité informatique paramétrée pour mettre en relation l'interphone d'entrée avec l'ordiphone d'un résident par l'intermédiaire de l'application numérique résident ;
- un serveur de l'application numérique,
caractérisé en ce qu'il comprend, à l'intérieur de chaque logement, un dispositif présentant un identifiant unique de logement apte à être lu par l'ordiphone par l'intermédiaire de l'application numérique résident, la plateforme informatique incluant une base de données listant les logements et leur identifiant unique de logement, et en ce que l'application numérique résident est paramétrée pour transmettre à l'unité informatique de la plateforme informatique, l'identifiant unique de logement lu par l'ordiphone, et en ce que l'unité informatique de la plateforme informatique est paramétrée pour recevoir, par l'intermédiaire de l'interphone d'entrée, une demande de mise en relation avec un résident et émettre, à destination de l'ordiphone du résident identifié par le numéro d'enregistrement unique généré par le serveur de l'application numérique, une notification d'appel.

Ainsi, un système de contrôle selon l'invention permet une mise en relation de l'interphone d'entrée avec l'ordiphone d'un résident sans pour autant nécessiter d'avoir enregistré au préalable le numéro de téléphone de l'ordiphone.

En effet, le système utilise l'application numérique chargée sur l'ordiphone du résident, avec son numéro d'enregistrement unique pour émettre la notification d'appel à destination de l'ordiphone sur lequel est chargé l'application numérique associée à son numéro d'enregistrement unique. La notification d'appel émise par le système est une notification connue sous l'anglicisme « notification push » classiquement mise en œuvre par des interfaces type back-office ou par une page web permettant d'envoyer automatiquement de telles notifications en passant par le serveur du gestionnaire de logement.

Par ailleurs, le système selon l'invention ne nécessite aucunement d'interphone de logement et permet donc de s'affranchir de tout câblage de celui-ci en particulier électrique.

On note également que l'administration des arrivées ou des sorties de résidents par le gestionnaire de logement est facilité avec un système selon l'invention.

En effet, le chargement de l'application informatique lors de l'entrée d'un résident dans son logement ou, au moment de son départ, la désinscription du résident de l'application informatique, permet des gains de temps appréciable pour le gestionnaire de logement.

Selon un mode de réalisation avantageux, le système comprend :
- au moins une porte ;
- une flotte de badges ayant chacun un numéro informatique ;
- au moins un lecteur de badge intégrant un identifiant informatique,
la plateforme informatique incluant une base de données listant les numéros informatiques de badges et les identifiants informatiques des lecteurs de badges, la plateforme informatique comprenant de plus une unité informatique paramétrée pour émettre, après vérification d'une correspondance entre le numéro informatique de badge et l'identifiant de lecteur de badge, une instruction d'ouverture de porte ou de non-ouverture à destination du lecteur de badge, les ordiphones de résidents incluant des moyens de communications de proximité aptes à communiquer avec les badges physiques, et l'application numérique résident étant paramétrée pour valider un enregistrement d'un résident après réception d'un numéro informatique de badge physique.

Selon ce mode de réalisation, on augmente le niveau de sécurité du système en autorisant l'enregistrement d'un résident si celui-ci détient un des badges du système associé au logement et avec lequel le résident valide l'enregistrement du résident sur la plateforme informatique.

Selon un mode de réalisation particulier, le dispositif à l'intérieur de chaque logement présente, en plus de l'identifiant unique de logement apte à être lu par l'ordiphone par l'intermédiaire de l'application numérique résident, un identifiant alphanumérique destiné à être saisi sur l'ordiphone d'un résident par l'intermédiaire de l'application numérique résident, l'application numérique résident étant paramétrée pour valider un enregistrement d'un résident après réception de l'identifiant alpha numérique.

Un tel mode de réalisation propose à nouveau un niveau de sécurité supplémentaire à l'enregistrement d'un résident, ce niveau de sécurité se combinant ou pas avec celui mettant en œuvre le badge physique décrit précédemment.

Selon une solution envisageable, l'application numérique résident est paramétrée pour transmettre, à l'unité informatique de la plateforme informatique, un numéro d'appel d'un ordiphone d'un résident, et l'unité informatique de la plateforme informatique est paramétrée pour associer, dans la base de données, le numéro d'appel avec le numéro d'enregistrement unique de l'application numérique résident chargée sur l'ordiphone.

De cette façon, le résident peut, de sa propre initiative et sans qu'il soit contraint par le système, décider d'enregistrer dans le système son numéro de téléphone, ceci éventuellement pour être joint autrement que par la notification d'appel émise par l'intermédiaire de l'application numérique résident.

Dans ce cas, l'interphone est avantageusement un visiophone, et l'unité informatique de la plateforme informatique est paramétrée pour recevoir, par l'intermédiaire du visiophone, une demande de mise en relation avec un résident et émettre, par l'intermédiaire du numéro d'appel de l'ordiphone du résident une demande de connexion audio/vidéo.

Ainsi, en ayant saisi son numéro de téléphone, le résident peut bénéficier d'une mise en relation utilisant les fonctionnalités avancées classiques d'un ordiphone, à savoir l'écran et le haut-parleur de l'ordiphone, plutôt que d'avoir une simple notification d'appel.

Selon une autre fonctionnalité envisageable, l'unité informatique de la plateforme informatique, après avoir associé, dans la base de données, un numéro d'appel avec un numéro d'enregistrement unique de l'application numérique résident chargée sur l'ordiphone, est paramétrée pour ouvrir un droit d'ajouter et/ou de modifier et/ou de supprimer des données dans la base de données.

Le résident peut ainsi bénéficier de fonctions avancées en ayant au préalable permis l'enregistrement de certaines de ses données personnelles.

D'autres caractéristiques et avantages de l'invention apparaîtront plus clairement à la lecture de la description suivante de différents modes de réalisation préférentiels de l'invention, donnés à titre d'exemples illustratifs et non limitatifs, et du dessin annexé :

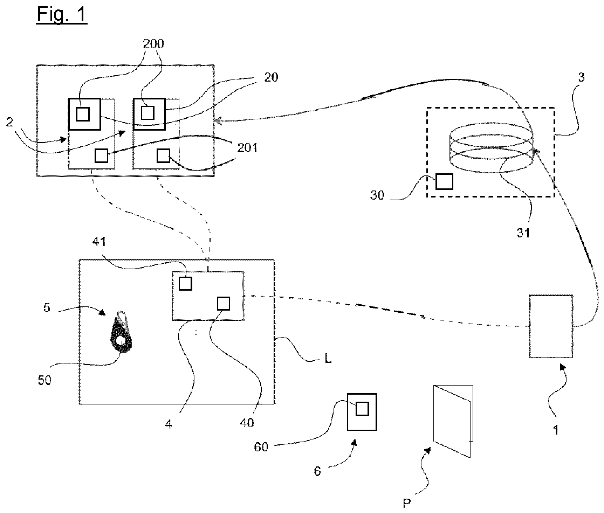

- la figure 1, unique, est une représentation schématique d'un système de contrôle d'accès selon l'invention.

En référence à la figure 1, un système de contrôle d'accès selon l'invention met en œuvre :
- un interphone d'entrée 1 d'un immeuble, prenant classiquement la forme d'une platine de rue, l'immeuble comprenant une pluralité de logements L ;
- une plateforme informatique 3, généralement distante de l'immeuble, administrée par le gestionnaire de logement.

Il est à noter que l'invention s'applique également aux interphones dématérialisés. Par exemple, une technique consiste à présenter à l'entrée de l'immeuble un QR code qui permet à un visiteur, après avoir scanné le QR code sur son ordiphone, d'afficher sur l'écran de son ordiphone l'équivalent d'un interphone donnant accès aux fonctions classiques d'appel d'une platine d'entrée.

Dans le contexte de l'invention, le système met également en œuvre des ordiphones 2 détenus par les résidents de l'immeuble et intégrant chacun une application, dite application numérique résident 20, incluant classiquement un numéro d'enregistrement unique 200.

La plateforme informatique 3 comprend une unité informatique 30 paramétrée pour mettre en relation l'interphone d'entrée 1 avec l'ordiphone 2 d'un résident par l'intermédiaire du numéro d'enregistrement numérique résident 20.

Le numéro d'enregistrement numérique 200 est généré par le serveur de l'application numérique à chaque chargement de l'application numérique résident et forme ainsi une sorte d'identifiant de l'ordiphone hôte de l'application numérique résident.

Selon le principe de l'invention, un dispositif 4 présentant un identifiant unique 40 de logement est placé à l'intérieur de chaque logement L de l'immeuble. Cet identifiant unique de logement est apte à être lu par l'ordiphone 2 d'un résident, ceci par l'intermédiaire de l'application numérique résident 20.

Typiquement, l'identifiant unique de logement peut prendre la forme d'un QR code affiché à l'intérieur du logement.

De plus, la plateforme informatique 3 inclut une base de données 31 listant les logements L et leurs identifiants uniques 40 de logement.

L'application numérique résident 20 est quant à elle paramétrée pour transmettre à l'unité informatique 30 de la plateforme informatique 3 l'identifiant unique 40 de logement lu par l'ordiphone 2 du résident qui intègre le logement L.

Toujours selon le principe de l'invention, l'unité informatique 30 de la plateforme informatique 3 est en outre paramétrée pour recevoir, par l'intermédiaire de l'interphone d'entrée 1 une demande de mise en relation avec un résident et émettre à destination de l'ordiphone 2 de ce résident identifié par le numéro d'enregistrement unique 200, une notification d'appel.

Après réception de cette notification d'appel, le résident peut ouvrir l'application numérique résident et accéder aux fonctions classiques de communication avec l'interphone d'entrée telles que la mise en communication avec le visiteur et/ou l'ouverture de porte.

On comprend que pour le déploiement d'un système de contrôle d'accès selon l'invention, le gestionnaire de logement fait installer le dispositif 4 à l'intérieur de chaque logement, l'installateur devant déclarer l'identifiant unique de logement 40 à la plateforme informatique 3 du gestionnaire de logement. Le logement L et son identifiant unique de logement 40 sont associés dans la base de données 31 de la plateforme informatique.

Le dispositif 4 est évidemment lisible à l'intérieur du logement. L'identifiant unique de logement présenté par le dispositif 4 peut par exemple être accompagnée de la mention « pour recevoir les appels de votre interphone, téléchargez l'application numérique résident et scannez l'identifiant unique de logement » (ou le QR code le cas échéant).

Un système de contrôle d'accès selon l'invention comprend en outre :
- au moins une porte P présente à l'entrée de l'immeuble par exemple ;
- une flotte de badges physiques 5, ayant chacun un numéro informatique 50 mémorisé dans une puce électronique intégrée au badge physique ;
- au moins un lecteur 6 de badges physiques, le lecteur intégrant un identifiant informatique.

Dans ce contexte, la base de données 31 de la plateforme informatique liste les numéros informatiques des badges physiques et les identifiants informatiques des lecteurs de badges physiques. De plus, l'unité informatique de la plateforme informatique est paramétrée pour émettre, après vérification d'une correspondance entre le numéro informatique du badge physique et l'identifiant de lecteur de badge physique, une instruction d'ouverture de porte ou de non-ouverture de porte à destination du lecteur de badge.

En outre, selon une caractéristique avantageuse de l'invention, les ordiphones des résidents incluent des moyens de communication de proximité aptes à communiquer avec les badges physiques, et l'application numérique résident est paramétrée pour valider un enregistrement d'un résident après réception d'un numéro informatique de badge physique.

Un ou plusieurs badges physiques peuvent ainsi être mis à la disposition du résident dans un boîtier présent dans le logement, ce boîtier intégrant également le dispositif 4 présentant l'identifiant unique 40 de logement.

Ce boîtier pourra ensuite servir aux résidents pour entreposer ces badges. Préférentiellement, le boîtier présente une façade pivotante ou à coulisse permettant de cacher l'identifiant unique de logement et les badges.

Dans le cas d'une colocation du logement, il est possible de disposer plusieurs boîtiers à l'intérieur d'un même logement. Chaque boîtier est alors indépendant et a sa propre fiche résident.

Selon un mode de réalisation envisageable, le dispositif 4 à l'intérieur de chaque logement L présente en plus de l'identifiant unique 40 apte à être lu par l'ordiphone du résident par l'intermédiaire de l'application numérique résident, un identifiant alphanumérique 41 destiné à être saisi sur l'ordiphone d'un résident par l'intermédiaire de l'application numérique résident, cette dernière étant alors paramétrée pour valider un enregistrement d'un résident sur la plateforme informatique du système après réception de l'identifiant alphanumérique.

Il est également possible que l'application numérique résident soit paramétrée pour transmettre, à l'unité informatique de la plateforme informatique 3, un numéro d'appel d'un ordiphone du résident. L'unité informatique 30 de la plateforme informatique est alors paramétrée pour associer, dans la base de données 31, le numéro d'appel avec le numéro d'enregistrement unique de l'application numérique résident chargée sur l'ordiphone.

Avec cette option, l'interphone d'entrée peut être un visiophone et l'unité informatique de la plateforme informatique est paramétrée pour recevoir, par l'intermédiaire du visiophone, une demande de mise en relation avec un résident et émettre, par l'intermédiaire du numéro d'appel de l'ordiphone du résident, une demande de connexion audio/vidéo sur l'ordiphone du résident.

Dans l'hypothèse où le résident a choisi l'option de saisir son numéro d'appel d'ordiphone, l'unité informatique de la plateforme informatique, après avoir associé, dans la base de données 31, ledit numéro d'appel avec le numéro d'enregistrement unique de l'application numérique résident chargée sur l'ordiphone, est paramétrée pour ouvrir un droit d'ajouter et/ou de modifier et/ou de supprimer des données dans la base de données 31 de la plateforme informatique.

Il est alors rendu possible aux résidents d'avoir accès aux données de la base de données le concernant, en lui permettant de :
- ajouter/modifier/supprimer son numéro d'appel d'ordiphone modifier et/ou supprimer des données personnelles le concernant,
- consulter les badges mis à sa disposition.

Ces droits d'accès aux données personnelles du résident seront à la progression du gestionnaire de logement.

## Revendications

1. Système de contrôle d'accès, du type mettant en oeuvre :
- un interphone d'entrée (1) d'un immeuble comprenant des logements (L) ;
- au moins un ordiphone (2) d'un résident de l'immeuble, l'ordiphone intégrant une application numérique (20) résident incluant un numéro d'enregistrement unique (200) ;
- une plateforme informatique (3) comprenant une unité informatique (30) paramétrée pour mettre en relation l'interphone d'entrée (1) avec l'ordiphone (2) d'un résident par l'intermédiaire de l'application numérique résident (20) ;
- un serveur de l'application numérique,
**caractérisé en ce qu'**il comprend, à l'intérieur de chaque logement (L), un dispositif (4) présentant un identifiant unique (40) de logement apte à être lu par l'ordiphone (2) par l'intermédiaire de l'application numérique résident (20), la plateforme informatique (3) incluant une base de données (31) listant les logements (L) et leur identifiant unique (40) de logement,
et **en ce que** l'application numérique résident (20) est paramétrée pour transmettre à l'unité informatique (30) de la plateforme informatique (3), l'identifiant unique de logement (40) lu par l'ordiphone (2),
et **en ce que** l'unité informatique (30) de la plateforme informatique (3) est paramétrée pour recevoir, par l'intermédiaire de l'interphone d'entrée (1), une demande de mise en relation avec un résident et émettre, à destination de l'ordiphone (2) du résident identifié par le numéro d'enregistrement unique (200) généré par le serveur de l'application numérique, une notification d'appel.

2. Système de contrôle d'accès selon la revendication 1, **caractérisé en ce qu'**il comprend :
- au moins une porte (P) ;
- une flotte de badges physiques (5) ayant chacun un numéro informatique (50),
- au moins un lecteur (6) de badges physiques intégrant un identifiant informatique (60),
la base de données (31) de la plateforme informatique (3) listant les numéros informatiques (50) de badges physiques (5) et les identifiants informatiques (60) du lecteur (6) de badges physiques, l'unité informatique (30) étant paramétrée pour émettre, après vérification d'une correspondance entre le numéro informatique de badge physique et l'identifiant de lecteur de badges physiques, une instruction d'ouverture de porte ou de non ouverture à destination du lecteur de badges physiques,
les ordiphones (2) des résidents incluant des moyens de communication de proximité (201) aptes à communiquer avec les badges physiques, et l'application numérique résident (20) étant paramétrée pour valider un enregistrement d'un résident après réception d'un numéro informatique de badge physique.

3. Système de contrôle d'accès selon la revendication 1, **caractérisé en ce que** le dispositif (4) à l'intérieur de chaque logement (L) présente, en plus de l'identifiant unique de logement (40) apte à être lu par l'ordiphone (2) par l'intermédiaire de l'application numérique résident (20), un identifiant alphanumérique (41) destiné à être saisi sur l'ordiphone (2) d'un résident par l'intermédiaire de l'application numérique résident (20), l'application numérique résident étant paramétrée pour valider un enregistrement d'un résident après réception de l'identifiant alphanumérique (41).

4. Système de contrôle d'accès selon l'une des revendications précédentes, **caractérisé en ce que** l'application numérique résident (20) est paramétrée pour transmettre, à l'unité informatique (30) de la plateforme informatique (3), un numéro d'appel d'un ordiphone (2) d'un résident, et **en ce que** l'unité informatique (30) de la plateforme informatique est paramétrée pour associer, dans la base de données (31), le numéro d'appel avec le numéro d'enregistrement unique (200) de l'application numérique résident (20) chargée sur l'ordiphone (2).

5. Système de contrôle d'accès selon la revendication 4, **caractérisé en ce que** l'interphone d'entrée (1) est un visiophone,
et **en ce que** l'unité informatique (30) de la plateforme informatique (3) est paramétrée pour recevoir, par l'intermédiaire du visiophone, une demande de mise en relation avec un résident et émettre, par l'intermédiaire du numéro d'appel de l'ordiphone du résident, une demande de connexion audio/vidéo.

6. Système de contrôle d'accès selon la revendication 4, **caractérisé en ce que** l'unité informatique (30) de la plateforme informatique (3), après avoir associé, dans la base de données (31), un numéro d'appel avec un numéro d'enregistrement unique (200) de l'application numérique résident (20) chargée sur l'ordiphone (2) est paramétrée pour ouvrir un droit d'ajouter et/ou de modifier et/ou de supprimer des données dans la base de données.
